# EUROPÄISCHE PATENTANMELDUNG

(11) **EP 3 694 183 A1**
(43) Veröffentlichungstag der Anmeldung: **12.08.2020**
(21) Anmeldenummer: 20154469.9
(22) Anmeldetag: 30.01.2020
(51) Int. Cl.: H04L 29/08, H04W 4/021, H04W 4/02, H04W 4/44

(54) **VERFAHREN UND VORRICHTUNG ZUM STEUERN EINER DATENÜBERTRAGUNG FÜR EIN FAHRZEUG**

(30) Priorität: 05.02.2019 DE 102019201423
(71) Anmelder: Robert Bosch GmbH, 70442 Stuttgart (DE)
(72) Erfinder: Frankenbach, Dennis, 74078 Heilbronn (DE)

(57) **Zusammenfassung**

Die Erfindung betrifft ein Verfahren zum Steuern einer Datenübertragung für ein Fahrzeug (100), das sich in einer Gegend bewegt, der ein erster Sendebereich und ein den ersten Sendebereich zumindest teilweise umgebender zweiter Sendebereich zugeordnet ist. Dabei umfasst das Verfahren einen Schritt des Ausgebens und einen Schritt des Bereitstellens. Im Schritt des Ausgebens wird ein Startsignal (106) ausgegeben, das einen Start der Übertragung von Daten signalisiert, wenn unter Verwendung einer aktuellen Position des Fahrzeugs (100) erkannt wird, dass das Fahrzeug (100) in den ersten Sendebereich eintritt. Im Schritt des Bereitstellens wird ein Endsignal (108) bereitgestellt, das ein Ende der Übertragung signalisiert, wenn unter Verwendung einer aktuellen Position des Fahrzeugs (100) erkannt wird, dass das Fahrzeug (100) aus dem ersten Sendebereich oder dem zweiten Sendebereich austritt.

## Beschreibung

### Stand der Technik

Die Erfindung geht von einer Vorrichtung, beispielsweise einem Steuergerät des Fahrzeugs oder einem mobilen Gerät, sowie von einem Verfahren zum Steuern einer Datenübertragung für ein Fahrzeug nach Gattung der unabhängigen Ansprüche aus. Gegenstand der vorliegenden Erfindung ist auch ein Computerprogramm.

Im Bezug auf Falschfahrerwarnungen können Sendegeräte ihre Position und beispielsweise Beschleunigungsdaten nur dann senden, sofern sich diese in der Nähe einer Autobahnauffahrt befinden. Der Grund dafür ist, dass die Autobahnauffahrten der Ursprung der meisten Falschfahrten ist.

Die DE 10 2016 210 025 A1 offenbart ein Verfahren, bei der zur Falschfahrererkennung unter Verwendung einer Umhüllenden Straßenabschnitte als eine Menge von vorangegangenen plausiblen Straßenabschnitten eingelesen werden.

### Offenbarung der Erfindung

Vor diesem Hintergrund werden mit dem hier vorgestellten Ansatz ein verbessertes Verfahren zum Steuern einer Datenübertragung für ein Fahrzeug, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Durch das Verfahren oder die Vorrichtung zum Steuern einer Datenübertragung für ein Fahrzeug wird erreicht, dass sowohl zu übertragende Datenmengen als auch eine notwendige Rechenleistung für die Datenübertragung sowie für die Verarbeitung der Daten reduziert werden können. Vorteilhafterweise kann es sich bei der Vorrichtung um ein fahrzeugseitig verbautes Gerät oder um ein mobiles Gerät handeln.

Es wird ein Verfahren zum Steuern einer Datenübertragung für ein Fahrzeug vorgestellt, das sich in einer Gegend bewegt, der ein erster Sendebereich und ein den ersten Sendebereich zumindest teilweise umgebender zweiter Sendebereich zugeordnet ist. Dabei umfasst das Verfahren einen Schritt des Ausgebens und einen Schritt des Bereitstellens. Im Schritt des Ausgebens wird ein Startsignal ausgegeben, das einen Start der Übertragung von Daten signalisiert, wenn unter Verwendung einer aktuellen Position des Fahrzeugs erkannt wird, dass das Fahrzeug in den ersten Sendebereich eintritt. Im Schritt des Bereitstellens wird ein Endsignal bereitgestellt, das ein Ende der Übertragung signalisiert, wenn unter Verwendung einer aktuellen Position des Fahrzeugs erkannt wird, dass das Fahrzeug aus dem ersten Sendebereich oder dem zweiten Sendebereich austritt.

Das Fahrzeug kann als Transportmittel für Personen und zusätzlich oder alternativ Gegenständen realisiert sein. Die Schritte des Verfahrens können von einer geeigneten Vorrichtung umgesetzt werden, die beispielsweise in dem Fahrzeug oder in einem mobilen Gerät integriert sein kann. Auch kann eine entsprechende Vorrichtung verteilt angeordnete Einrichtungen aufweisen, sodass beispielsweise zum einen eine Fahrzeugsensorik zum Bereitstellen erforderlicher Daten und zum anderen eine Kommunikationsschnittstelle eines mobilen Geräts zur Datenübertragung, beispielsweise zu einer Cloud, verwendet werde kann. Der erste Sendebereich kann einen geschlossenen Bereich umfassen, der ausschließlich von einer ringförmigen ersten Begrenzungslinie begrenzt werden kann. Die Begrenzungslinie kann die Gestalt eines beliebigen Polygons haben. Der zweite Sendebereich kann bandförmig sein und einen Bereich umfassen, der zwischen der ersten Begrenzungslinie und einer außerhalb des ersten Sendebereichs liegenden zweiten Begrenzungslinie liegt. Beispielsweise kann der zweite Sendebereich einen geschlossenen Ring um den ersten Sendebereich darstellen. Er kann die Gestalt eines beliebigen Polygons außerhalb des ersten Sendebereichs haben. Der erste Sendebereich und der zweite Sendebereich können im Bereich einer Auffahrt beispielsweise auf eine Autobahn angeordnet sein. Somit kann die Datenübertragung genutzt werden, um eine Information über einen Falschfahrer zu übertragen. Die Übertragung der Daten kann beispielsweise unter Verwendung eines Smartphones oder einer fahrzeuginternen Komponente des Fahrzeugs durchgeführt werden. Vorteilhafterweise kann der zweite Sendebereich verwendet werden, um einen Start und zusätzlich oder alternativ ein Ende der Datenübertragung bei Überschreiten der ersten Begrenzungslinie zu optimieren. Die aktuelle Position kann anzeigen, wo sich das Fahrzeug aktuell befindet. Insbesondere kann unter Verwendung der aktuellen Position bestimmt werden, ob sich das Fahrzeug aktuell in dem ersten Sendebereich, dem zweiten Sendebereich oder außerhalb beider Sendebereiche befindet. Ein der aktuellen Position vorangegangener Verlauf einer Bewegung des Fahrzeugs kann unter Verwendung der aktuellen Position zeitlich vorangegangener Positionen des Fahrzeugs bestimmt werden oder bestimmt worden sein. Unter der aktuellen Position des Fahrzeugs kann eine bezüglich des Fahrzeugs bestimmte Position, beispielsweise eine unter Verwendung einer Positionsbestimmungseinrichtung des Fahrzeugs bestimmte Position, oder eine Position eines in dem Fahrzeug mitgeführten mobilen Geräts, beispielsweise eines Smartphones, verstanden werden.

Beispielsweise kann im Schritt des Bereitstellens das Endsignal, durch das die Datenübertragung beendet werden kann, bereitgestellt werden, wenn unter Verwendung der aktuellen Position des Fahrzeugs erkannt wird, dass das Fahrzeug aus dem ersten Sendebereich und nachfolgend aus dem zweiten Sendebereich ausgetreten ist. Das bedeutet, dass eine Übertragung von Daten erst dann beendet wird, wenn das Fahrzeug zeitlich nach dem Verlassen des ersten Sendebereichs auch den zweiten Sendebereich verlässt. Dies kann dadurch erkannt werden, dass sich die aktuelle Position des Fahrzeugs außerhalb des zweiten Sendebereichs befindet. Unter Verwendung zeitlich vorangegangener Positionen des Fahrzeugs kann erkannt worden sein, dass das Fahrzeug nach Verlassen des ersten Sendebereichs auch den zweiten Sendebereich verlassen hat. Es kann aber auch bedeuten, dass sich die ermittelte GPS-Position direkt im ersten Sendebereich befindet, beispielsweise aufgrund von GPS-Ungenauigkeiten oder Start/Einschalten des Algorithmus im ersten Sendebereich.

Gemäß einer Ausführungsform kann im Schritt des Ausgeben das Startsignal ausgegeben werden, durch das die Datenübertragung gestartet werden kann, wenn unter Verwendung der aktuellen Position des Fahrzeugs erkannt wird, dass das Fahrzeug in den ersten Sendebereich eintritt, nachdem es den zweiten Sendebereich passiert hat. Passieren kann bedeuten, dass das Fahrzeug den zweiten Sendebereich vollständig durchquert hat. Vorteilhafterweise können durch den Start der Datenübertragung andere Verkehrsteilnehmer beispielsweise im Falle eines Falschfahrers rechtzeitig gewarnt werden.

Ansprechend auf den Schritt des Bereitstellens des Endsignals kann ein erneutes Ausgeben des Startsignals blockiert werden, um ein erneutes Starten der Übertragung zu verhindern. Dies kann dann der Fall sein, wenn unter Verwendung der aktuellen Position des Fahrzeugs erkannt wird, das sich das Fahrzeug ohne vorheriges Verlassen des zweiten Sendebereichs von dem zweiten Sendebereich in den ersten Sendebereich bewegt. Durch das Verhindern einer erneuten Übertragung kann gemäß einer Ausführungsform eine zu übertragende Datenmenge erheblich reduziert werden, wodurch beispielsweise ein Energieverbrauch ebenfalls reduziert wird.

Weiterhin kann das Verfahren gemäß einer Ausführungsform einen Schritt des Einlesens eines Positionssignals umfassen, das die aktuelle Position des Fahrzeugs repräsentiert. Auf diese Weise kann die aktuelle Position fortlaufend aktualisiert werden. Die aktuelle Position kann beispielsweise unter Verwendung einer Positionsbestimmungseinrichtung des Fahrzeugs oder einer das Verfahren umsetzenden Vorrichtung, beispielsweise sattelitenbasiert, bestimmt werden.

Zusätzlich oder alternativ, kann im Schritt des Einlesens das Positionssignal über eine Schnittstelle zu einer fahrzeugexternen Einrichtung und zusätzlich oder alternativ einer Cloud eingelesen werden. Die fahrzeugexterne Einrichtung kann beispielsweise als ein Satellitennavigationssystem oder Rechenzentrum realisiert sein, über das das Positionssignal bereitgestellt wird. Dies ist beispielsweise sinnvoll, wenn das Fahrzeug über keine eigenständige Positionsbestimmung verfügt oder das Verfahren auf einer fahrzeugexternen Vorrichtung, beispielsweise einem Smartphone, ausgeführt wird.

Ferner kann das Verfahren einen Schritt des Übertragens der Daten ansprechend auf das Startsignal aufweisen. Vorteilhafterweise wird durch das Startsignal ein Zeitpunkt bestimmt, an dem die Übertragung der Daten beginnen kann. Das Übertragen der Daten kann solange andauern, bis das Endsignal bereitgestellt wird.

Gemäß einer Ausführungsform können die Daten die aktuelle Position und/oder eine Beschleunigung des Fahrzeugs repräsentieren. Diese Daten ermöglichen die Erkennung eines Falschfahrers. Vorteilhafterweise kann so im Falle eines Falschfahrens eine genaue Falschfahrerwarnung an andere Verkehrsteilnehmer ausgegeben werden.

Gemäß einer Ausführungsform können in einem Schritt des Einlesens erste Positionsdaten eingelesen werden, die einen Umriss des ersten Sendebereichs kennzeichnen und in einem Schritt des Bestimmens zweite Positionsdaten unter Verwendung der ersten Positionsdaten bestimmt werden, um den zweiten Sendebereich zu definieren. Das bedeutet, dass die ersten Positionsdaten eine erste Begrenzungslinie definieren können, die den ersten Sendebereich begrenzt. Die zweiten Positionsdaten können eine zweite Begrenzungslinie definieren, die den zweiten Sendebereich nach außen hin begrenzt. Dabei ist der zweite Sendebereich beispielsweise um den ersten Sendebereich angeordnet. Vorteilhafterweise kann der zweite Sendebereich automatisiert von einer das Verfahren ausführenden Vorrichtung bestimmt werden. Auf diese Weise kann beispielsweise eine Ausdehnung des zweiten Sendebereichs individuell bestimmt festgelegt werden, beispielsweise abhängig von einem Typ des Fahrzeugs oder eines sich innerhalb des ersten Sendebereichs befindlichen Straßenabschnitts. Beispielsweise können die zweiten Positionsdaten unter Verwendung einer Verschiebevorschrift aus den ersten Positionsdaten bestimmt werden.

Dieses Verfahren kann beispielsweise in Software oder Hardware oder in einer Mischform aus Software und Hardware beispielsweise in einer Vorrichtung implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Steuerung eines Startsignals, das einen Start einer Übertragung von Daten signalisiert, und eines Endsignals, das ein Ende der Übertragung signalisiert. Hierzu kann die Vorrichtung beispielsweise auf Sensorsignale wie ein Positionssignal und ein Beschleunigungssignal zugreifen. Die Ansteuerung kann unter Verwendung von geeigneten Einrichtungen erfolgen, wie einer Ausgabeeinheit zum Ausgeben des Startsignals und einer Bereitstelleinheit zum Bereitstellen des Endsignals.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Fahrzeugs mit einer Vorrichtung zum Steuern einer Datenübertragung gemäß einem Ausführungsbeispiel;
Fig. 2 eine schematische Darstellung eines ersten Sendebereichs und eines zweiten Sendebereichs gemäß einem Ausführungsbeispiel;
Fig. 3 eine schematische Darstellung eines ersten Sendebereichs und eines zweiten Sendebereichs gemäß einem Ausführungsbeispiel;
Fig. 4 eine schematische Darstellung eines ersten Sendebereichs und eines zweiten Sendebereichs gemäß einem Ausführungsbeispiel; und
Fig. 5 ein Ablaufdiagramm eines Verfahrens zum Steuern einer Datenübertragung für ein Fahrzeug gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

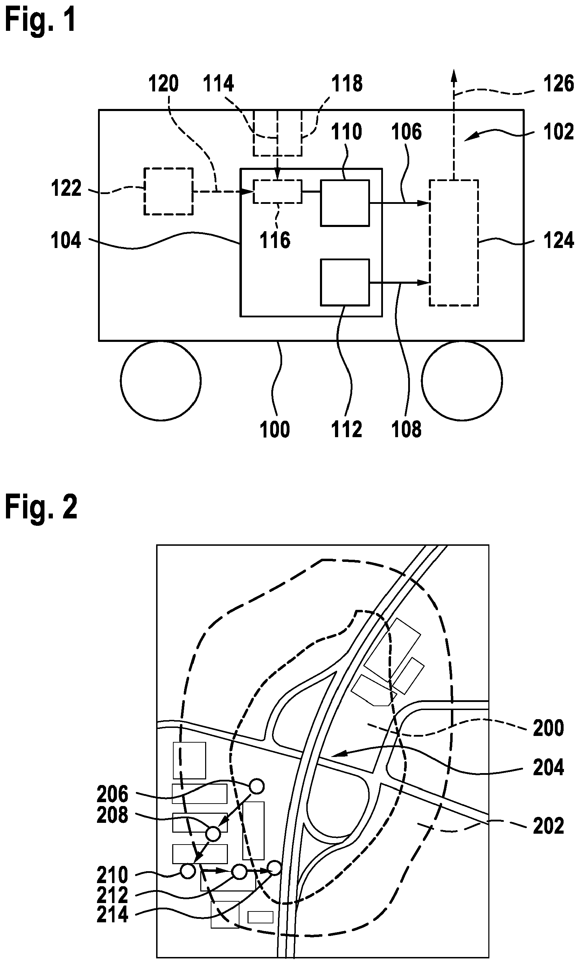

Fig. 1 zeigt eine schematische Darstellung eines Fahrzeugs 100 mit einer Vorrichtung 102 zum Steuern einer Datenübertragung gemäß einem Ausführungsbeispiel. Das Fahrzeug 100 ist gemäß einem Ausführungsbeispiel ausgebildet, um Personen und Gegenstände zu transportieren. Dabei weist das Fahrzeug 100 eine Vorrichtung 102 auf, die ausgebildet ist, um ein Verfahren zum Steuern einer Datenübertragung durchzuführen, wenn sich das Fahrzeug 100 in einer Gegend bewegt, der ein erster Sendebereich und ein zweiter Sendebereich zugeordnet ist. Dabei umgibt der zweite Sendebereich zumindest teilweise den ersten Sendebereich. Wenn der zweite Sendebereich den ersten Sendebereich vollständig umgibt, muss das Fahrzeug 100 den zweiten Sendebereich zunächst passieren, bevor es in den ersten Sendebereich eintreten kann. Der erste Sendebereich kann beispielsweise einen gefährlichen Straßenabschnitt umfassen. Beispielsweise ist der erste Sendebereich in einer digitalen Karte verzeichnet. Gemäß einem Ausführungsbeispiel ist auch ein Eintritt in den ersten Sendebereich ohne vorheriges Betreten des zweiten Sendebereichs möglich. Dies kann beispielsweise im Falle von GPS-Ungenauigkeiten auftreten.

Gemäß unterschiedlicher Ausführungsbeispiele ist die Vorrichtung 102 beispielsweise als ein in das Fahrzeug 100 integriertes Gerät, beispielsweise ein Steuergerät, oder als ein von dem Fahrzeug 100 transportiertes mobiles Gerät, beispielsweise als ein Smartphone eines Insassen des Fahrzeugs 100, ausgeführt.

Teil der Vorrichtung 102 ist eine Einrichtung 104, die ausgebildet ist, um ein Startsignal 106 auszugeben, das einen Start einer Übertragung von Daten signalisiert. Dies geschieht jedoch nur, wenn unter Verwendung einer aktuellen Position des Fahrzeugs 100 erkannt wird, dass das Fahrzeug 100 in den ersten Sendebereich eintritt. Außerdem ist die Einrichtung 104 ausgebildet, um ein Endsignal 108 bereitzustellen, das ein Ende der Übertragung signalisiert, wenn unter Verwendung einer aktuellen Position des Fahrzeugs 100 erkannt wird, dass das Fahrzeug 100 aus dem ersten Sendebereich oder dem zweiten Sendebereich austritt. Gemäß diesem Ausführungsbeispiel umfasst die Einrichtung 104 eine Ausgabeeinheit 110, die ausgebildet ist, um das Startsignal 106 auszugeben und eine Bereitstellungseinheit 112, die ausgebildet ist, das Endsignal 108 bereitzustellen.

Gemäß diesem Ausführungsbeispiel ist die Einrichtung 104 weiterhin ausgebildet, um ein Positionssignal 114 über eine Einleseeinheit 116 einzulesen. Das Positionssignal 114 umfasst eine Information über eine aktuelle Position des Fahrzeugs. Optional weist das Fahrzeug 100 eine Empfangseinrichtung 118 auf, die beispielsweise ein eingehendes Funksignal empfängt und die empfangene Information als das Positionssignal 114 an die Einleseeinheit 116 bereitstellt. Die durch das Positionssignal 114 übermittelte Information ist dabei gemäß einem Ausführungsbeispiel von einer fahrzeugexternen Einrichtung und zusätzlich oder alternativ von einer Cloud bereitgestellt worden. Zusätzlich oder alternativ weist das Fahrzeug 100, die Vorrichtung 102 oder die Einrichtung 104 eine Positionsbestimmungseinrichtung zum Bestimmen der aktuellen Position des Fahrzeugs auf. Die Einleseeinheit 116 ist ferner ausgebildet, um ein Beschleunigungssignal 120 einzulesen, das eine Beschleunigung des Fahrzeugs 100 repräsentiert. Das Beschleunigungssignal 120 wird gemäß einem Ausführungsbeispiel von beispielsweise einem Beschleunigungssensor 122 bereitgestellt. Alternativ oder zusätzlich umfasst die Vorrichtung 102 oder die Einrichtung 104 einen entsprechenden Beschleunigungssensor.

Gemäß einem Ausführungsbeispiel weist die Vorrichtung 102 eine Übertragungseinrichtung 124 auf, die ausgebildet ist, um ein Übertragungssignal 126 auszugeben, das gemäß einem Ausführungsbeispiel die zu übertragenden Daten repräsentiert. Die Daten beinhalten dabei die durch das Positionssignal 114 übermittelte aktuelle Position, und die durch das Beschleunigungssignal 120 übermittelte Beschleunigung des Fahrzeugs 100.

Gemäß einem Ausführungsbeispiel ermöglicht die in Fig. 1 gezeigte Vorrichtung 102 eine Falschfahrerwarnung, die auch als Wrong-Way-Driver-Warning bezeichnet wird, und zwar als Teil eines cloudbasierten Systems. Der beschriebene Ansatz basiert beispielsweise darauf, dass Geräte, wie beispielsweise das Fahrzeug 100 oder alternativ auch ein Smartphone, ihre aktuelle Position sowie Beschleunigungsdaten senden können, sofern sich diese innerhalb eines ersten Sendebereichs befinden, der sich beispielsweise in der Nähe einer Autobahnauffahrt befindet. Ein solcher erste Sendebereich wird auch als Bounding-Box bezeichnet. Hierdurch lässt sich eine Menge der zu übertragenden Daten und ein Akkuverbrauch beispielsweise von mobilen Endgeräten verringern. Zusätzlich gehen für die Falschfahrerwarnung keine notwendigen Daten verloren, da die meisten Falschfahrten in den Auffahrtsbereichen beginnen.

Jedoch ist die aktuelle Position des Fahrzeugs 100, die beispielsweise als GPS-Position realisiert ist, nicht ganz genau, weswegen sie unter Nebeneffekten leidet, wie so genannte Drifts, bei denen sich die ermittelte Position mit der Zeit von der wahren Position entfernt, oder Hopping, also ein vermeintliches Springen der ermittelten Position des Fahrzeugs 100. Indem gemäß dem hier vorgestellten Ansatz neben dem ersten Sendebereich zusätzlich ein zweiter Sendebereich eingesetzt wird, können unerwünschte Folgen solcher Nebeneffekte vermieden werden. Ohne den zweiten Sendebereich könnte es zu folgendem Verhalten kommen:

Ein Sendegerät befindet sich innerhalb, jedoch am Rand des ersten Sendebereichs. Durch Ungenauigkeiten der Positionsbestimmung wird angenommen, dass sich das Gerät kurzzeitig außerhalb des ersten Sendebereichs befindet. Dies würde zu einem Stopp der Übertragung führen. Anschließend driftet die GPS-Position wieder in den ersten Sendebereich hinein. Ein erneutes Starten der Datenübertragung würde erfolgen. Durch die Verwendung des zweiten Sendebereichs kann ein solches Verhalten vermieden werden. Dies ist gerade bei Fahrzeugen 100 relevant, die sich an einer Grenze zu dem ersten Sendebereich befinden, wo ohne den zweiten Sendebereich das genannten Stoppen und erneute Starten der Übertragung der Daten ständig und wiederholt auftreten könnte. Da dies unter Verwendung des zweiten Sendebereichs vermieden werden kann, können die zu sendenden Daten und der Energieverbrauch beispielsweise von mobilen Endgeräten deutlich reduziert werden. Dies kann gemäß einem Ausführungsbeispiel dadurch erfolgen, dass die Datenübertragung spätestens nach N (zu definierender Parameter) Paketen beendet wird. Gleichzeitig führt dies dazu, dass eine Cloud mit deutlich geringeren Datenmengen umgehen braucht und unnötige Datenmengen vermieden werden. Dies stellt einen Kostenfaktor dar.

Fig. 2 zeigt eine schematische Darstellung eines ersten Sendebereichs 200 und eines zweiten Sendebereichs 202 gemäß einem Ausführungsbeispiel. Der zweite Sendebereich 202 ist um den ersten Sendebereich 200 angeordnet. Gemäß einem Ausführungsbeispiel weisen der ersten Sendebereich 200 und der zweite Sendebereich 202 keine gemeinsame Schnittmenge auf. Der erste Sendebereich 200 ist gemäß einem Ausführungsbeispiel um eine Autobahnauffahrt 204 angeordnet, da beispielsweise Falschfahrten häufig an so einer Stelle beginnen. Beispielhaft ist die Autobahnauffahrt 204 vollständig innerhalb des ersten Sendebereichs 200 angeordnet.

Lediglich beispielhaft ist der erste Sendebereich 200 annähernd oval ausgeführt und umfasst einen von einer erste Begrenzungslinie umschlossenen Bereich. Der zweite Sendebereich 202 ist ringförmig ausgeformt oder hat die Gestalt eines beliebigen Polygons und wird von einer zweiten Begrenzungslinie und der ersten Begrenzungslinie begrenzt. Dabei wird die erste Begrenzungslinie von der zweiten Begrenzungslinie umschlossen.

Gemäß diesem Ausführungsbeispiel wird eine Ausgangsposition 206 sowie mögliche Bewegungsrichtungen eines Fahrzeugs zu einer zweiten Position 208 und möglichen weiteren Positionen 210, 212, 214 dargestellt. Die Ausgangsposition 206 befindet sich dabei innerhalb des ersten Sendebereichs 200. Das Fahrzeug oder ein entsprechendes mobiles Gerät umfasst eine Vorrichtung zum Steuern einer Datenübertragung, wie sie anhand von Fig. 1 beschrieben ist.

Gemäß diesem Ausführungsbeispiel wird durch den zweiten Sendebereich 202 ein größerer Umkreis um die Autobahnauffahrt 204 abgedeckt, sodass beispielsweise bei einer Übertragung von Daten, wie sie in Fig. 1 beschrieben wurde, Ungenauigkeiten vermieden und eine Menge von zu übertragenden Daten verringert werden kann, wenn das Fahrzeug oder das mobile Gerät den ersten Sendebereich 200 verlässt und die zweite Position 208 erreicht, die sich innerhalb des zweiten Sendebereichs 202 befindet. Bewegt sich das Fahrzeug aus beiden Sendebereichen 200, 202 heraus, beispielsweise zu der Position 210, so kann eine Übertragung der Daten beendet werden. Gemäß einem Ausführungsbeispiel ist es nicht auszuschließen, dass sich das Fahrzeug erneut in zumindest einen der Sendebereiche 200, 202 hinein bewegt. Wenn sich das Fahrzeug ausgehend von der Position 210 erneut in den ersten Sendebereich 200 eintritt, beispielsweise nach der Position 212 die Position 214 erreicht, kann die Übertragung der Daten erneut gestartet werden.

Beginn und Ende der Datenübertragung können in anderen Worten durch eine Art Hysterese getrennt werden. Befindet sich die ermittelte Position 206 des Fahrzeugs zu Beginn an einem Startpunkt im ersten Sendebereich 200 werden gemäß einem Ausführungsbeispiel zunächst N Datensätze gesendet, bis der Sendevorgang beendet wird. N ist dabei eine Maximalanzahl an zu sendenden Daten. Driftet die ermittelte GPS-Position anschließend durch Ungenauigkeiten aus dem ersten Sendebereich 200 heraus, wird die Datenübertragung nicht sofort beendet. Erst bei Verlassen des zweiten Sendebereichs 202, dargestellt durch die Position 210, soll die Datenübertragung , ebenfalls spätestens nach der Maximalanzahl von N Datensätzen, sofern sich das Fahrzeug nicht vorher aus dem zweiten Sendebereich 202 hinausbewegt, beendet werden. Hierdurch kann ein ständiges Beenden der Datenübertragung vermieden werden. Die Datenübertragung soll erst wieder gestartet werden, sobald sich die aktuelle Position, hier dargestellt durch die Position 214, die beispielsweis in Form einer GPS-Position vorliegt, wieder innerhalb des ersten Sendebereichs 200 befindet.

Somit kann eine Datenmenge durch einen Abbruch des Sendevorgangs reduziert werden, sobald sich die beispielsweise als Endgerät ausgeführte Vorrichtung zum Steuern einer Datenübertragung, außerhalb des ersten Sendebereichs 200 befindet. Hierdurch kann eine notwendige Rechenleistung sowohl der Cloud als auch im Smartphone reduziert werden. Zusätzlich kann Akku und Datentraffic, also eine Datenmenge, reduziert werden.

Da die GPS-Position nicht genau ist und mit den oben genannten Nebeneffekten gerechnet werden muss, kann sich die ermittelte Position kurzzeitig bis außerhalb des ersten Sendebereichs 200 bewegen und sich anschließend wieder in den ersten Sendebereich 200 bewegen. Durch die Verwendung des zweiten Sendebereichs 202 führt dies jedoch nicht dazu, dass erneut Daten gesendet werden und in der beispielsweise im Smartphone angeordneten Vorrichtung Berechnungen stattfinden, die letztendlich den Akkuverbrauch erhöhen. Zusätzlich braucht die Cloud nur mit den tatsächlich erforderlichen Datenmengen umgehen, welches ebenfalls einen Kostenfaktor darstellt.

Befindet sich die ermittelte GPS-Position zu Beginn also im ersten Sendebereich 200, hier dargestellt durch die Position 206, werden zunächst N Datensätze gesendet, bis der Sendevorgang beendet wird. Driftet die ermittelte GPS-Position anschließend durch Ungenauigkeiten aus dem ersten Sendebereich 200 heraus, hier dargestellt durch die Position 208, darf ein erneutes Eindringen der ermittelten GPS-Position in den ersten Sendebereich 200 kein erneutes Senden auslösen. Erst, wenn sich die GPS-Position außerhalb des zweiten, größeren Sendebereichs 202 befindet, hier dargestellt durch die Position 210, und sich anschließend wieder in den ersten Sendebereich 200 bewegt, hier dargestellt durch die Positionen 212, 214, darf dies ein erneutes Senden der Datenpakete auslösen.

Schlussfolgernd lässt sich die Vorgehensweise wie folgt zusammenfassen, wobei die Verwendung einer Hysterese erfolgt:
Bei Eintritt in den de ersten Sendebereich 200, der auch als innere Bounding-Box bezeichnet werden kann, erfolgt ein Start der Datenübertragung. Bei Verlassen des zweiten Sendebereichs 202, der auch als äußere Bounding-Box bezeichnet wird, erfolgt ein Beenden der Datenübertragung.

Die Generierung des zweiten Sendebereichs 202 kann durch Vergrößerung der bisherigen Hotspots, also der Punkte, die die erste Begrenzungslinie bilden, die den ersten Sendebereich 200 umschließt, um x-Meter erfolgen. Ein guter Wert für x kann hierbei durch Tests ermittelt werden. Zur Generierung des zweiten Sendebereichs 202 werden beispielsweise erste Positionsdaten eingelesen, die erste Punkte umfassen, die die erste Begrenzungslinie bilden. Unter Verwendung der ersten Positionsdaten können zweite Positionsdaten bestimmt werden, die zweite Punkte umfassen, die die zweite Begrenzungslinie bilden, die den zweiten Sendebereich umschließt. Die zweiten Punkte können dabei durch eine Verschiebung der ersten Punkte um eine bestimmte Strecke bestimmt werden. Die Verschiebung kann dabei beispielsweise ausgehend von einem Mittelpunkt des ersten Sendebereichs 200 radial nach außen erfolgen.

Gemäß einem Ausführungsbeispiel erfolgt der Start der Datenübertragung dann, wenn zunächst ein Eintritt in den zweiten Sendebereich 202 und anschließend in den ersten Sendebereich 200 erfolgt. Wird der erste Sendebereich 200 anschließend verlassen, so erfolgt ein Beenden der Datenübertragung. Wenn nach dem Verlassen des ersten Sendebereichs 200 anschließend ein Eintritt in den ersten Sendebereich 200 erfolgt, ohne das zuvor der zweite Sendebereich 202 erreicht wurde, erfolgt kein erneutes Starten der Datenübertragung.

Für eine cloudbasierte Falschfahrerwarnung kann es jedoch sinnvoll sein, die Datenübertragung erst dann zu beenden, wenn die nach dem ersten Sendebereich 200 auch der zweite Sendebereich 202 verlassen wurde.

Beide Vorgehensweisen lassen sich auch auf andere verteilte Systeme anwenden.

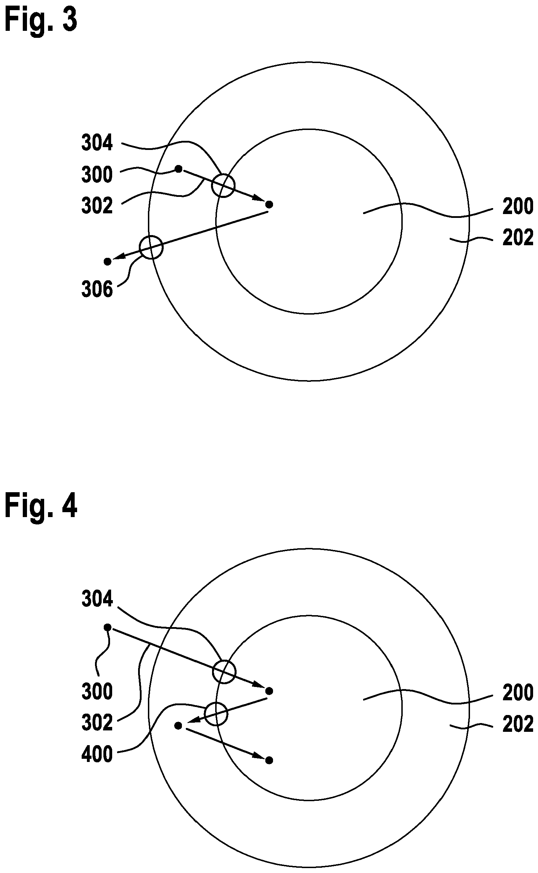

Fig. 3 zeigt eine schematische Darstellung eines ersten Sendebereichs 200 und eines zweiten Sendebereichs 202 gemäß einem Ausführungsbeispiel. Die hier gezeigten Sendebereiche 200, 202 entsprechen dabei den in Fig. 2 beschriebenen Sendebereichen 200, 202. Gemäß diesem Ausführungsbeispiel ist jedoch eine spezielle Situation dargestellt, um zu verdeutlichen, wann eine Übertragung von Daten gemäß einem Ausführungsbeispiel beginnt und wann sie endet. Ein hier dargestellter Punkt 300 stellt gemäß diesem Ausführungsbeispiel eine Ausgangsposition des Fahrzeugs dar, die sich im zweiten Sendebereich 202 befindet. Von hier aus bewegt sich das Fahrzeug in Richtung des ersten Sendebereichs 200, was hier durch einen Pfeil 302 dargestellt ist. Ab der Stelle 304, an der das Fahrzeug in den ersten Sendebereich 200 eintritt, startet gemäß diesem Ausführungsbeispiel die Übertragung der Daten und endet ab der Stelle 306, an der sich das Fahrzeug oder das mobile Gerät sowohl aus dem ersten Sendebereich 200 als auch aus dem zweiten Sendebereich 202 hinaus bewegt hat.

Gemäß unterschiedlicher Ausführungsbeispiele kann das Starten und/oder das Enden der Übertragung dann erfolgen, wenn die jeweilige Begrenzungslinie erreicht oder überschritten ist. Entsprechend kann die Stelle 304 entweder als auf der ersten Begrenzungslinie liegend oder als bereits innerhalb des von der ersten Begrenzungslinie umschlossenen Bereichs liegend angesehen werden. Entsprechend kann die Stelle 306 entweder als auf der zweiten Begrenzungslinie liegend oder als bereits außerhalb des von der zweiten Begrenzungslinie umschlossenen Bereichs liegend angesehen werden.

Fig. 4 zeigt eine schematische Darstellung eines ersten Sendebereichs 200 und eines zweiten Sendebereichs 202 gemäß einem Ausführungsbeispiel. Die hier gezeigten Sendebereiche 200, 202 entsprechen dabei den in den Fig. 2 und 3 beschriebenen Sendebereichen 200, 202. Gemäß diesem Ausführungsbeispiel ist jedoch eine zu der in Fig. 3 alternative Situation dargestellt, um zu verdeutlichen, wann eine Übertragung von Daten gemäß einem Ausführungsbeispiel beginnt und wann sie endet. Ein hier dargestellter Punkt 300 stellt auch gemäß diesem Ausführungsbeispiel eine Ausgangsposition des Fahrzeugs dar. Abweichend zu Fig. 3 befindet sich die Ausgangsposition des Fahrzeugs außerhalb des zweiten Sendebereichs 202. Das Fahrzeug bewegt sich jedoch auch hier in Richtung des ersten Sendebereichs 200, was auch hier durch einen Pfeil 302 dargestellt ist. Auch gemäß diesem Ausführungsbeispiel startet die Übertragung der Daten ab der Stelle 304, an der das Fahrzeug in den ersten Sendebereich 200 eintritt. Anders als zuvor jedoch endet die Übertragung gemäß diesem Ausführungsbeispiel an einer Stelle 400, wenn sich das Fahrzeug aus dem ersten Sendebereich 200 hinausbewegt und wird nicht erneut gestartet, wenn sich das Fahrzeug direkt aus dem zweiten Sendebereich 202 erneut in den ersten Sendebereich 200 bewegt. Gemäß einem Ausführungsbeispiel ist dies auch zu berücksichtigen, wenn beispielsweise durch eine ungenaue Positionsangabe ein Signal vom ersten Sendebereich 200 in den zweiten Sendebereich 202 und umgekehrt springt.

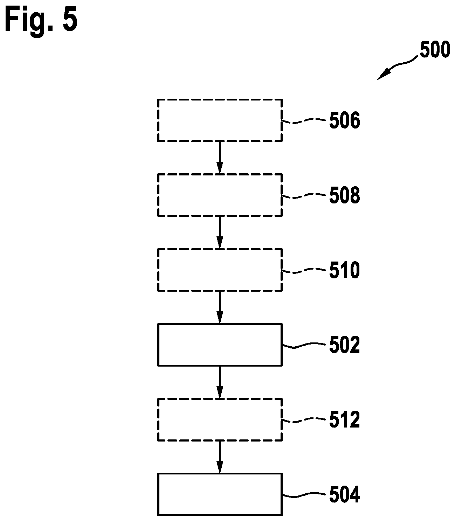

Fig. 5 zeigt ein Ablaufdiagramm eines Verfahrens 500 zum Steuern einer Datenübertragung für ein Fahrzeug gemäß einem Ausführungsbeispiel. Das Verfahren 500 ist gemäß einem Ausführungsbeispiel in einem Fahrzeug anwendbar, wie es in Fig. 1 beschrieben wurde. Das Verfahren 500 weist einen Schritt 502 des Ausgebens und einen Schritt 504 des Bereitstellens auf. Im Schritt 502 des Ausgebens wird ein Startsignal ausgegeben. Das Startsignal zeigt einen Start der Datenübertragung an, wenn das Fahrzeug in einen ersten Sendebereich eintritt. Dazu wird eine aktuelle Position des Fahrzeugs verwendet. Zusätzlich kann zumindest eine der aktuellen Position zeitlich vorhergehende Position des Fahrzeugs verwendet werden. Im Schritt 504 des Bereitstellens wird ein Endsignal bereitgestellt, das ein Ende der Übertragung anzeigt, wenn das Fahrzeug den ersten Sendebereich oder einen zweiten Sendebereich verlässt. Auch dafür wird eine nun aktuelle Position des Fahrzeugs verwendet. Zusätzlich kann zumindest eine der nun aktuellen Position zeitlich vorhergehende Position des Fahrzeugs verwendet werden.

Optional umfasst das Verfahren 500 einen Schritt 506 des Einlesens eines Positionssignals und/oder einen Schritt 508 des Einlesens erster Positionsdaten und/oder einen Schritt 510 des Bestimmens zweiter Positionsdaten. Im Schritt 506 des Einlesens repräsentiert das Positionssignal die aktuelle Position des Fahrzeugs. Im Schritt 508 des Einlesens kennzeichnen die ersten Positionsdaten einen Umriss des ersten Sendebereichs. Im Schritt 510 des Bestimmens werden zweite Positionsdaten unter Verwendung der ersten Positionsdaten bestimmt, um den zweiten Sendebereich zu definieren. Sowohl die ersten als auch die zweiten Positionsdaten sind gemäß einem Ausführungsbeispiel als eine Aneinanderreihung mehrerer Positionen zu verstehen, die, wenn sie miteinander verbunden würden, jeweils eine Begrenzungslinie darstellen, wie sie beispielsweise in Fig. 2 zur Kennzeichnung der Sendebereiche dargestellt wurden. Außerdem umfasst das Verfahren 500 gemäß einem Ausführungsbeispiel optional einen Schritt 512 des Übertragens, der beispielsweise nach dem Schritt 502 des Ausgebens des Startsignals ausgeführt wird. Im Schritt 512 des Übertragens werden die Daten bezüglich der aktuellen Position des Fahrzeugs sowie seiner Beschleunigung übertragen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (500) zum Steuern einer Datenübertragung für ein Fahrzeug (100), das sich in einer Gegend bewegt, der ein erster Sendebereich (200) und ein den ersten Sendebereich (200) zumindest teilweise umgebender zweiter Sendebereich (202) zugeordnet ist, wobei das Verfahren (500) die folgenden Schritte umfasst:
Ausgeben (502) eines Startsignals (106), das einen Start der Übertragung von Daten signalisiert, wenn unter Verwendung einer aktuellen Position des Fahrzeugs (100) erkannt wird, dass das Fahrzeug (100) in den ersten Sendebereich (200) eintritt; und
Bereitstellen (504) eines Endsignals (108), das ein Ende der Übertragung signalisiert, wenn unter Verwendung einer aktuellen Position des Fahrzeugs (100) erkannt wird, dass das Fahrzeug (100) aus dem ersten Sendebereich (200) oder dem zweiten Sendebereich (202) austritt.

2. Verfahren (500) gemäß Anspruch 1, wobei im Schritt (504) des Bereitstellens das Endsignal (108) bereitgestellt wird, wenn unter Verwendung der aktuellen Position des Fahrzeugs (100) erkannt wird, dass das Fahrzeug (100) aus dem ersten Sendebereich (200) und nachfolgend aus dem zweiten Sendebereich (202) ausgetreten ist.

3. Verfahren (500) gemäß einem der vorangegangenen Ansprüche, wobei im Schritt (502) des Ausgebens das Startsignal (106) ausgegeben wird, wenn unter Verwendung der aktuellen Position des Fahrzeugs (100) erkannt wird, dass das Fahrzeug (100) in den ersten Sendebereich (200) eintritt, nachdem es den zweiten Sendebereich (202) passiert hat.

4. Verfahren (500) gemäß einem der vorangegangenen Ansprüche, wobei ansprechend auf den Schritt (504) des Bereitstellens ein erneutes Ausgeben des Startsignals (106) blockiert wird, um ein erneutes Starten der Übertragung zu verhindern, wenn unter Verwendung der aktuellen Position des Fahrzeugs (100) erkannt wird, das sich das Fahrzeug (100) ohne vorheriges Verlassen des zweiten Sendebereichs (202) von dem zweiten Sendebereich (202) in den ersten Sendebereich (200) bewegt.

5. Verfahren (500) gemäß einem der vorangegangenen Ansprüche, mit einem Schritt (506) des Einlesens eines Positionssignals (114), das die aktuelle Position des Fahrzeugs (100) repräsentiert.

6. Verfahren (500) gemäß Anspruch 5, wobei im Schritt (506) des Einlesens das Positionssignal (114) über eine Schnittstelle zu einer fahrzeugexternen Einrichtung und/oder einer Cloud eingelesen wird.

7. Verfahren (500) gemäß einem der vorangegangenen Ansprüche, mit einem Schritt (512) des Übertragens der Daten ansprechend auf das Startsignal (106).

8. Verfahren (500) gemäß Anspruch 7, wobei im Schritt (512) des Übertragens die Daten die aktuelle Position und eine Beschleunigung des Fahrzeugs (100) repräsentieren.

9. Verfahren (500) gemäß einem der vorangegangenen Ansprüche, mit einem Schritt (508) des Einlesens erster Positionsdaten, die einen Umriss des ersten Sendebereichs (200) kennzeichnen und einem Schritt (510) des Bestimmens zweiter Positionsdaten unter Verwendung der ersten Positionsdaten, um den zweiten Sendebereich (202) zu definieren.

10. Vorrichtung (102), die eingerichtet ist, um die Schritte (502, 504, 506, 508, 510, 512) des Verfahrens (500) gemäß einem der vorangegangenen Ansprüche in entsprechenden Einheiten (110, 112, 116, 124) auszuführen und/oder anzusteuern.

11. Computerprogramm, das dazu eingerichtet ist, die Schritte (502, 504, 506, 508, 510, 512) des Verfahrens (500) gemäß einem der vorangegangenen Ansprüche auszuführen und/oder anzusteuern.

12. Maschinenlesbares Speichermedium, auf dem das Computerprogramm nach Anspruch 11 gespeichert ist.
